# EUROPÄISCHE PATENTSCHRIFT

(11) **EP 0 355 301 B1**
(45) Veröffentlichungstag und Bekanntmachung des Hinweises auf die Patenterteilung: **24.05.1995**
(21) Anmeldenummer: 89111083.5
(22) Anmeldetag: 19.06.1989
(51) Int. Cl.: F16K 41/18

(54) **Absperrschieber**
Gate valve
Vanne d'arrêt

(30) Priorität: 23.08.1988 DE 3828561
(43) Veröffentlichungstag der Anmeldung: 28.02.1990
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 247 275
- AU-B- 451 046
- AU-B- 530 527
- DE-B- 1 143 070
- DE-B- 1 168 723
- DE-B- 2 407 136
- DE-C- 11 267
- DE-C- 141 837
- GB-A- 546 772
- GB-A- 2 180 037
- US-A- 1 302 990
- US-A- 2 869 942

## Beschreibung

Die Erfindung betrifft einen Absperrschieber, bestehend aus einem mit Rohranschlüssen und einem Deckel versehenen Gehäuse, in welchem ein von einer Schraubspindel verschiebbarer Verschlußkörper mit einem zylindrisch gestalteten Hals angeordnet ist.

Absperrschieber dienen der Absperrung von Wasser-, Abwasser- und Gasleitungen. Im Betrieb kann es vorkommen, daß nach einer bestimmten Zeit der Benutzung Verschleiß und Undichtigkeiten auftreten. In Neubaugebieten kann es vorkommen, daß nach oben gerichtete Teile eines Absperrschiebers, insbesondere die den Verschlußkörper bewegende Spindel, durch äußere Eingriffe, wie z.B. die Einwirkung durch Baufahrzeuge, beschädigt werden. In solchen Fällen sind Dichtungen oder Teile des Absperrschiebers auszuwechseln. Dieses Auswechseln soll im Betrieb der Rohrleitung möglich sein, damit nicht Bewohner eines Hauses oder einer Reihe von Häusern während der Reparatur- und Auswechselbarbeiten von der Versorgung und der Entsorgung abgeschnitten werden müssen.

Bei einem Eckventil, das in der GB-A-546 772 beschrieben ist, ist es möglich, solche Auswechselarbeiten durchzuführen, ohne daß die Rohrleitung stillgesetzt werden muß. Bei diesem Eckventil ist ein Verschlußkörper vorhanden, welcher beidseitig mit einem Dichtkonus versehen ist, von denen der eine in einen der Absperrung der Rohrleitung dienenden Dichtsitz einpreßbar ist, während der andere Dichtkonus bei geöffneter Rohrleitung in einen gegenüberliegend angeordneten weiteren Dichtsitz einpreßbar ist. Befindet sich der Verschlußkörper in dieser zweitgenannten Dichtstellung, so kann der Verschlußkörper durch einen Arretierstift in dieser Stellung gesichert werden, der durch ein Loch im zylindrisch gestalteten Hals des Verschlußkörpers einschiebbar ist.

In der Praxis ergeben sich jedoch Probleme: Das Eckventil muß mit höchster Präzision hergestellt werden, damit der Stift in das Loch des zylindrisch gestalteten Halses einschiebbar ist, und zwar in einer Stellung einschiebbar ist, bei der die Abdichtung des Dichtkonus gewährleistet ist. Das ist nur dadurch zu erreichen, daß nach dem Ausbau der Spindel eine Schraube gegen den Arretierstift geschraubt wird, die den Verschlußkörper in seinem Dichtsitz arretiert. Bis zu dieser Arretierung kann in der Rohrleitung fließendes Medium an dieser Stelle austreten. Vor dem Einschrauben einer Ersatzspindel ist diese Schraube aber wieder zu lösen, damit der Arretierstift wieder herausziehbar wird. Vom Lösen der Schraube bis zum endgültigen abgedichteten Einbau der Spindel kann wiederum Medium aus der Rohrleitung austreten.

Das kann bei unter Normaldruck stehenden Wasserleitungen noch hingenommen werden, nicht jedoch bei Gasleitungen und insbesondere bei unter hohem Druck stehenden Gasleitungen.

In diesen Rohrleitungen werden zum Absperren nicht Eckventile eingesetzt, sondern Absperrschieber. Solche Absperrschieber sind beispielsweise aus der AU-B-73 948 /81 bekannt geworden. Ein solcher Absperrschieber besteht aus einem beidseits mit Rohranschlüssen versehenen Gehäuse, in welchem ein Verschlußkörper in beidseits im Gehäuse angebrachten Führungen verschiebbar angeordnet ist und an welchem eine Haube befestigt ist, die mit einem Deckel versehen ist, in dem eine Schraubspindel gelagert ist, deren eines Ende als glatte Welle ausgebildet ist, durch eine Zentralöffnung in den Deckel geführt ist und mit einem Handrad versehen ist, und deren mit Gewinde versehener Teil in ein Innengewinde im Hohlraum des Verschlußkörpers eingreift. Derartige Absperrschieber besitzen bisher nicht die Möglichkeit der Auswechslung ihrer Spindel im Betrieb der Rohrleitung, was aber gerade hier notwendig wäre, weil gerade bei solchen Absperrschiebern leicht einmal die Spindel durch äußere Einwirkungen der obengenannten Art beschädigt werden kann.

Die Erfindung vermeidet die Nachteile des Standes der Technik. Es ist die Aufgabe der Erfindung, einen einfach aufgebauten Absperrschieber zu schaffen, bei dem es in einfacher Weise im Betrieb der Rohrleitung möglich ist, die Spindel und ihre Lagerung auszuwechseln.

Der erfindungsgemäße Absperrschieber zeichnet sich dadurch aus, daß die Rohranschlüsse beidseits am Gehäuses angeordnet sind, daß im Gehäuse beidseits Führungen für den Verschlußkörper angebracht sind, daß an dem Gehäuse eine Haube befestigt ist, an der der Deckel angebracht ist, daß in dem Deckel eine Schraubspindel gelagert ist, deren eines Ende als glatte Welle ausgebildet ist, durch eine Zentralöffnung in dem Deckel geführt ist und mit einem Handrad versehen ist, und deren mit Gewinde versehener Teil in ein Innengewinde im Hohlraum des Verschlußkörpers eingreift, daß in der Haube eine hohlzylindrisch gestaltete Ausnehmung vorhanden ist,in welche der Hals des Verschlußkörpers einschiebbar ist, und daß der Dichtsitz des Halses in der hohlzylindrischen Ausnehmung in der Haube durch einen Elastomerring gebildet ist, welcher den Hals des Verschlußkörpers umgibt und an einer Ringfläche der Haube anliegt, wobei der Elastomerring zugleich Haltemittel beim Auswechseln der Spindel und der Spindellagerung beim Betrieb der Rohrleitung ist.

Bei einem derartigen Absperrschieber läßt sich ein Auswechseln der Spindellagerung im Betrieb der Rohrleitung ohne Betätigung von Mitteln für die Arretierung und Feststellung des Verschlußkörpers in der Endlage der Offenstellung vornehmen. Allein durch die Bewegung der Verschlußkörpers in die Endlage der Offenstellung ist erreicht, daß der Absperrschieber selbsttätig in dieser Lage festgesetzt und abgedichtet ist. Bei diesem Absperrschieber kann die Spindel sogar dann, wenn sie infolge äußerer Kräfte so deformiert ist, daß sie nicht mehr drehbar ist, ausgebaut werden. Denn bereits durch leichtes Lösen des Deckels wird der Verschlußkörper durch den Druck in der Rohrleitung in seine Endoffenstellung gedrückt, in der selbsttätig eine Abdichtung ohne äußeres Hinzutun erreicht ist.

Besonders zweckmäßig ist es, wenn die Dichtmittel aus mindestens einer Lippendichtung bestehen. Denn diese dichtet hervorragend ab, läßt aber eine Rückbewegung des Schiebers in seine Verschlußstellung ohne weiteres zu.

Bei höheren Drucken in der abzusperrenden Leitung kann es zweckmäßig sein, wenn in der Haube ein die Dichtung umgehender Bypaß gebildet ist, der durch ein Ventil verschließbar ist. Durch diese Maßnahme wird erreicht, daß der Hals des Verschlußkörpers sich tief genug in seinen Sitz einbringen läßt. Als Ventil wird z.B. eine federbelastete Kugel benutzt, das Ventil kann aber auch aus einer einfachen Schraube bestehen, die in den Bypaß eingreift und diesen versperrt.

Eine andere Ausführungsform der Erfindung besteht darin, daß der Dichtsitz durch ein eingelegtes Kunststoffteil gebildet ist, welches an seiner Außen- und Innenseite mit Dichtringen versehen ist. Dieses Kunststoffteil kann durch an ihm angebrachte oder in dieses Kunststoffteil eingreifende Spreizen, Schrauben oder sonstige Haltemittel befestigt sein.

Insbesondere ist es vorteilhaft, wenn in der Wandung des Kunststoffteiles ein Bypaß achsparallel angeordnet ist, der eine senkrechte Abzweigung aufweist, in die eine im Deckel eingeschraubte Verschlußschraube eingreift.

Weiter ist es vorteilhaft, wenn der wellenförmige Teil der Spindel in einer Kunststoffbuchse gelagert ist, die an ihrer Inneren und äußeren Umfangsfläche mit Dichtringen versehen ist.

Das Wesen der Erfindung ist nachstehend anhand von in der Zeichnung schematisch dargestellten Ausführungsbeispielen näher erläutert. Es zeigen:
- Fig. 1: einen Querschnitt durch einen Absperrschieber mit zylindrischem Sitz für den Hals des Verschlußkörpers,

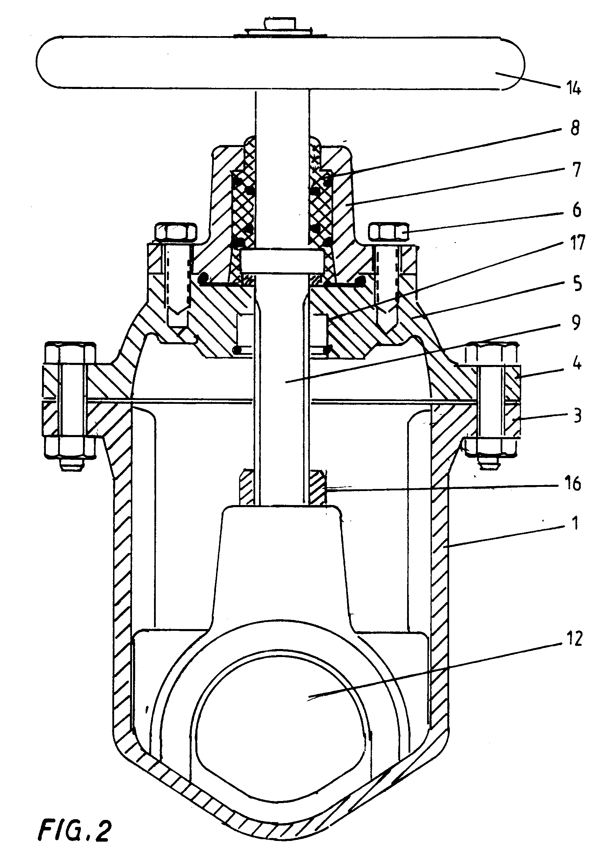

- Fig. 2: einen Längsschnitt durch diesen Absperrschieber,
- Fig. 3: einen Querschnitt durch einen Absperrschieber, in dessen Haube ein Dichtsitz aus Kunststoff eingelegt ist,
- Fig. 4: einen Querschnitt durch einen Absperrschieber, dessen Dichtsitz mit zwei Ventilen versehen ist.
- Fig. 5: im Querschnitt eine andere Ausführungsform des Dichtsitzes,
- Fig. 6: im Querschnitt eine weitere Ausführungsform des Dichtsitzes.

Das Gehäuse 1 ist beidseits mit Rohranschlüssen 2 versehen und weist an seinem oberen Ende einen Flansch 3 auf, an dem der Flansch 4 der Haube 5 befestigt ist, an der mittels Schrauben 6 der Deckel 7 befestigt ist. Im Deckel 7 ist ein Kunststofflager 8 für die Spindel 9 untergebracht, welches sowohl auf seiner Innenseite als auch auf seiner Außenseite mit Dichtringen 10 versehen ist. Die Spindel 9 weist einen glatten wellenförmigen Teil 9A auf, trägt als Sicherung gegen axiale Verschiebung einen Bundring 9B und weist einen mit Außengewinde versehenen Teil 9C auf, der in das Innengewinde der Mutter 11 eingreift, die im hohlen Innenraum des Verschlußkörpers 12 befestigt ist, der mit einem Gummiüberzug 13 versehen ist. Die Spindel ist mit einem Handrad 14 zu drehen, bei dieser Drehbewegung wird der Verschlußkörper 12 aus der gezeichneten Verschlußstellung in den Innenraum 15 gezogen, der im Inneren des Gehäuses 1 und der Haube 5 gebildet ist. Befindet sich der Verschlußkörper 12 in diesem Innenraum 15, ist der Weg für das Fließmedium zwischen den beiden Rohranschlüssen 2 frei.

Um die Spindel 9, den Deckel 7 und das Lager 8 auswechseln zu können, befindet sich an dem dem Handrad 14 zugewandten Ende des Verschlußkörpers 12 ein halsförmiger Ansatz 16, der dichtend in den Sitz 17 eingreift.

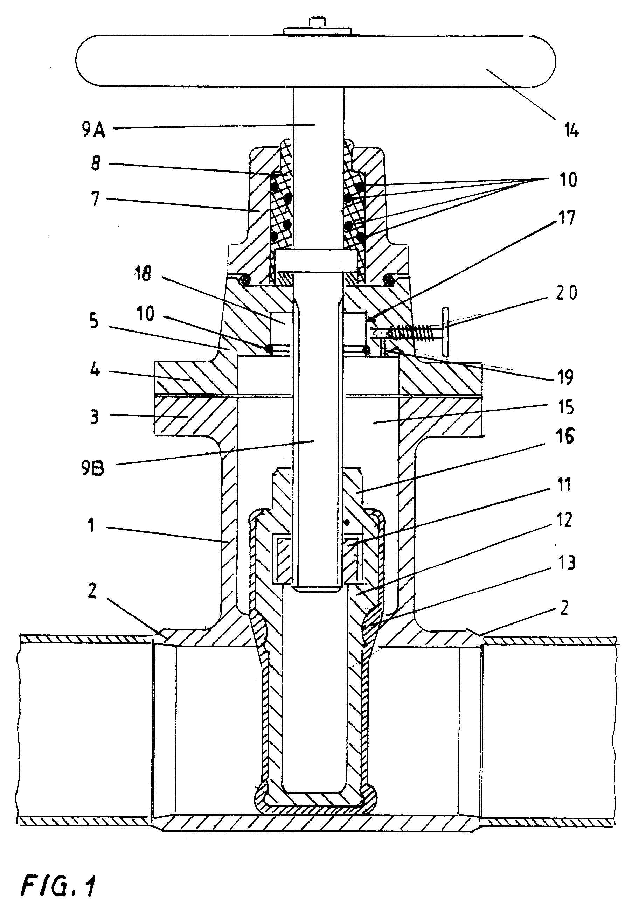

Im Ausführungsbeispiel der Fig. 1 ist dieser halsförmige Ansatz 16 zylindrisch ausgebildet, der Sitz 17 ist als Hohlzylinder ausgebildet. Er kann unmittelbar in das Material des Deckels 5 eingearbeitet sein, er kann aber auch aus einem Einsatz bestehen, der in den Deckel 5 eingedrückt ist. Dieser Sitz 17 weist mindestens einen Dichtring 10 auf. Wenn der halsförmige Ansatz 16 in den Sitz 17 durch Drehen der Spindel 9 hineinbewegt wird, ist in dem sich dadurch bildenden abgeschlossenen Raum zwischen der Stirnseite des Ansatzes 16, den Innenwandungen des Sitzes 17, der Außenwandung der Spindel 9 und der inneren Oberfläche der Haube 5 ein Hohlraum 18 gebildet, in welchem sich fließfähiges Medium aufhalten kann, das über die Rohransätze 2 in den Hohlraum 15 eingedrungen ist. Dieses in diesem Hohlraum 18 befindliche fließfähige Medium würde ein Eindringen des Halses 16 in den Sitz 17 verhindern, wenn es sich um ein inkompressibles Medium handelt. Um den Hohlraum 18 von diesem fließfähigem Medium freimachen zu können, ist der Bypaß 19 vorgesehen, der durch ein Ventil 20 zu verschließen ist. Dieses Ventil 20 besteht aus einer Schraube, deren Spitze so gestaltet ist, daß sie den Bypaß 19 verschliessen kann.

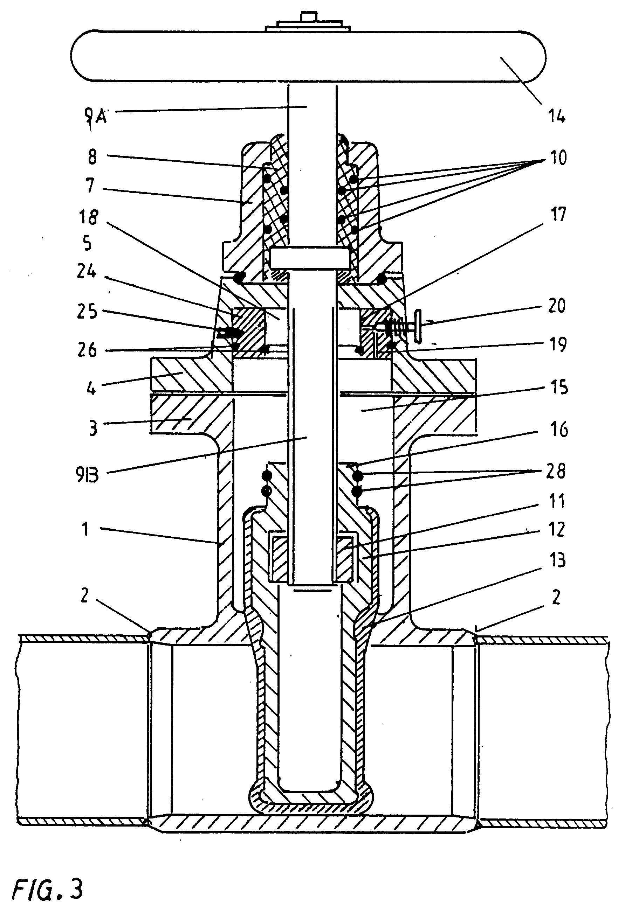

Im Ausführungsbeispiel der Fig. 3 ist der halsförmige Ansatz 16 wieder zylindrisch ausgebildet und in die Haube 15 ist ein als Sitz dienender Kunststoffring 24 eingelegt. Dieser Kunststoffring wird durch Schrauben 25 in der Haube 5 gehalten. Dichtringe 26 an der inneren und äußeren Umfangsfläche dienen der Abdichtung einerseits zwischen dem Kunststoffring 24 und der Innenwandung der Haube 5 und andererseits zwischen dem halsförmigen Ansatz 16 und dem Kunststoffring 24. - Im Kunststoffring 24 ist ein Bypaß 19 ausgebildet, der durch ein Ventil 20 in Form einer Schraube verschließbar ist.

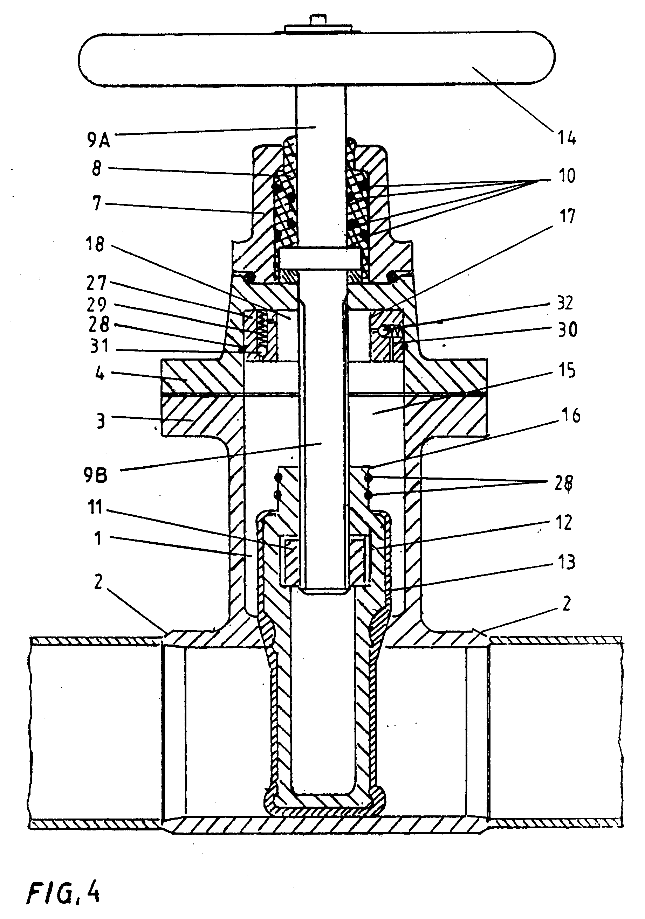

Im Ausführungsbeispiel der Fig. 4 ist ein ähnlicher Ring 27, der vorzugsweise aus Metall gefertigt ist, in die Haube 5 eingelegt. Dieser ist an seiner inneren und äußeren Umfangsfläche mit Dichtringen 28 versehen. Dieser Ring weist zwei Bypässe 29, 30 auf, die durch Überströmventile 31, 32 verschließbar sind. Die Überströmventile 31, 32 sind in entgegengesetzter Richtung wirksam, sie öffnen bei unterschiedlich hohen Druckwerten.

Zweckmäßig ist es, wenn der wellenförmige Teil 9A der Spindel 9 in einer Kunststoffbuchse 8 gelagert ist, die an ihrer inneren und äußeren Umfangsfläche mit Dichtringen 10 versehen ist.

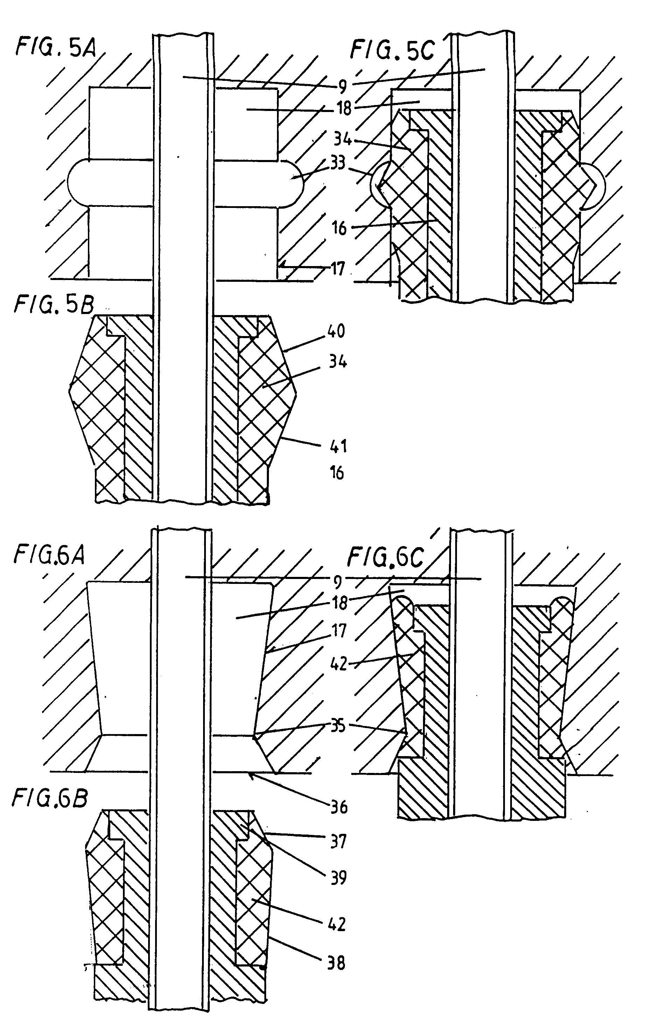

In Fig. 5 ist im Querschnitt eine andere Ausführungsform des Dichtsitzes dargestellt. Und zwar ist in Fig. 6A der Dichtsitz, in Fig. 6B der halsförmige Ansatz des Verschlußkörpers jeweils in Einzeldarstellung und in Fig. 6C im zusammengeschobenen, dichtenden Zustand dargestellt. Der Dichtsitz 17 ist zylindrisch ausgebildet. Er weist etwa mittig eine ringförmige Ausnehmung 33 auf, die im Querschnitt halbkreisförmig ist. Der halsförmige Ansatz 16 weist an seinem Ende einen flansch- bzw. bundartigen Vorsprung 39 auf, der der Halterung eines Elastomerringes 34 dient, dessen Oberfläche sich von den Enden zur Mitte zu radial, vorzugsweise kegelförmig erweitert. Es sind hier zwei Kegelflächen 40, 41 ausgebildet, so daß in der Mitte eine ringförmige Zone maximalen Durchmessers entsteht, die sich, wie aus Fig. 6C ersichtlich, in die Ausnehmung 33 hereinpreßt, wenn der halsförmige Ansatz 16 durch Drehen der Spindel 9 in die höchste, d.h. dichtende Stellung gezogen ist. In dieser Stellung ist eine hervorragend gute Abdichtung erzielt. Die im verbleibenden Restraum des Dichtsitzes 17 verbleibende Luft ist durch das Hereinziehen des halsförmigen Ansatzes 16 komprimiert, diese komprimierte Luft entweicht aber sofort beim Lockern des Deckels 7, so daß der halsförmige Ansatz durch den Druck in den Rohranschlüssen 2 in seinem Sitz gehalten wird. - Dieses gilt im übrigen für alle Ausführungsformen des erfindungsgemäßen Absperrschiebers.

Im Ausführungsbeispiel der Fig. 6 zeigt Fig. 6A einen Querschnitt durch den Dichtsitz 17, Fig. 6B einen Querschnitt durch den halsförmigen Ansatz und Fig. 6C einen Querschnitt durch beide, nachdem der halsförmige Ansatz in den Dichtsitz hineingezogen ist. Diese Ausführungsform zeichnet sich dadurch aus, daß der Dichtsitz 17 sich in seinem Durchmesser von beiden stirnseitigen Enden her vorzugsweise kegelförmig zu einer Schmalstelle 35 verjüngt, wobei die Schmalstelle 35 vorzugsweise in der der Öffnung 36 zugewandten Hälfte angeordnet ist, und daß der halsförmige Ansatz 16 einen Elastomerring 36 trägt, der sich in seinem Außendurchmesser von beiden Stirnseiten her zu einem Maximaldurchmesser, vorzugsweise unter Bildung kegelförmiger Flächen 38, 37 erweitert, wobei der Maximaldurchmesser an einer Stelle in der oberen Hälfte erreicht ist. Auch diese Ausführungsform gewährleistet einen sehr dichten und sehr festen Sitz, so daß irgend welche weiteren Haltemittel nicht erforderlich sind. Auch hier wird der Überdruck im Restraum 18 durch Lockern des Deckels 7 beseitigt.

## Patentansprüche

1. Absperrschieber,
bestehend aus einem mit Rohranschlüssen und einem Deckel (7) versehenen Gehäuse (1),
in welchem ein von einer Schraubspindel (9) verschiebbarer Verschlußkörper (12) mit einem zylindrisch gestalteten Hals (16) angeordnet ist,
dadurch gekennzeichnet,
daß die Rohranschlüsse beidseits am Gehäuses (1) angeordnet sind,
daß im Gehäuse (1) beidseits Führungen für den Verschlußkörper (12) angebracht sind,
daß an dem Gehäuse (1) eine Haube (5) befestigt ist, an der der Deckel (7) angebracht ist,
daß in dem Deckel (7) die Schraubspindel (9) gelagert ist,
deren eines Ende als glatte Welle ausgebildet ist,
durch eine Zentralöffnung in dem Deckel (7) geführt ist und mit einem Handrad (14) versehen ist,
und deren mit Gewinde versehener Teil in ein Innengewinde im Hohlraum des Verschlußkörpers (12) eingreift,
daß in der Haube (5) eine hohlzylindrisch gestaltete oder eine konisch sich nach innen erweiternde Ausnehmung (17) vorhanden ist,
in welche der Hals des Verschlußkörpers (12) einschiebbar ist,
und daß der Dichtsitz des Halses (16) in der hohlzylindrischen Ausnehmung (17) in der Haube (5) durch einen Elastomerring (10,28) gebildet ist,
welcher den Hals (16) des Verschlußkörpers (12) umgibt und an einer Ringfläche der Haube (5) anliegt,
wobei der Elastomerring (10,28) derart ausgebildet ist, daß er zugleich Haltemittel beim Auswechseln der Spindel (9) und der Spindellagerung beim Betrieb der Rohrleitung ist.

2. Absperrschieber nach Anspruch 1,
dadurch gekennzeichnet,
daß der Elastomerring (10,28) mindestens eine Lippendichtung (21) aufweist.

3. Absperrschieber nach Anspruch 1,
dadurch gekennzeichnet,
daß in der Haube (5) ein die Dichtung umgebender Bypaß (19,29,30) gebildet ist, der durch ein Ventil (20, 31, 32) verschließbar ist.

4. Absperrschieber nach Anspruch 1,
dadurch gekennzeichnet,
daß der Dichtsitz (17) durch einen eingelegten Ring (24), vorzugsweise aus Kunststoff oder Metall, gebildet ist, welcher an seiner Außen- und/oder Innenseite mit Dichtringen (26) versehen ist.

5. Absperrschieber nach Anspruch 1,
dadurch gekennzeichnet,
daß der wellenförmige Teil (9A) der Spindel (9) in einer Kunststoffbuchse (34) gelagert ist, die an ihrer inneren und äußeren Umfangsfläche mit Dichtringen (35) versehen ist.

6. Absperrschieber nach Anspruch 1,
dadurch gekennzeichnet,
daß der Dichtsitz (17) zylindrisch ist, eine ringförmige Ausnehmung (33) aufweist
und daß der halsförmige Ansatz (16) einen Elastomerring (34) trägt, dessen Oberfläche sich von den Enden zur Mitte zu radial, vorzugsweise kegelförmig, erweitert.

7. Absperrschieber nach Anspruch 1,
dadurch gekennzeichnet,
daß der Dichtsitz (17) sich in seinem Durchmesser von beiden stirnseitigen Enden her vorzugsweise kegelförmig zu einer Schmalstelle (35) verjüngt,
wobei die Schmalstelle vorzugsweise in der der Öffnung (36) zugewandten Hälfte angeordnet ist
und daß der halsförmige Ansatz (16) einen Elastomerring (42) trägt, der sich in seinem Außendurchmesser von beiden Stirnseiten her zu einem Maximaldurchmesser, vorzugsweise unter Bildung kegelförmiger Flächen (37,38) erweitert,
wobei der Maximaldurchmesser an einer Stelle in der oberen Hälfte erreicht ist.

## Claims

1. Stop valve consisting of a housing (1) provided with pipe connections and a cap (7), in which is disposed a blanking element (12) which has a cylindrically shaped neck (16) and can be moved by a threaded spindle (9), characterised in that the pipe connections are disposed on the housing (1) on both sides, in that guides for the blanking element (12) are provided in the housing (1) on both sides, in that a cover (5) to which the cap (7) is attached, is secured to the housing (1), in that the threaded spindle (9) is mounted in the cap (7), one end of said threaded spindle being embodied as a smooth shaft, guided through a central opening in the cap (7) and provided with a hand wheel (14), and the threaded part of said threaded spindle engaging in an internal thread in the cavity of the blanking element (12), in that a recess (17) which is hollow and cylindrical in shape or widens conically towards the inside and into which the neck of the blanking element (12) can be inserted, is present in the cover (5), and in that the sealing seat of the neck (16) in the hollow cylindrical recess (17) in the cover (5) is formed by an elastomer ring (10, 28) which surrounds the neck (16) of the blanking element (12) and bears against an annular surface of the cover (5), the elastomer ring (10, 28) being embodied so that it also forms a supporting means when the spindle (9) and the spindle mounting are changed while the pipeline is in service.

2. Stop valve according to claim 1, characterised in that the elastomer ring (10, 28) exhibits at least one lip seal (21).

3. Stop valve according to claim 1, characterised in that a bypass (19, 29, 30) which surrounds the seal and can be closed by a valve (20, 31, 32), is formed in the cover (5).

4. Stop valve according to claim 1, characterised in that the sealing seat (17) is formed by an inserted ring (24), preferably of plastic or metal, which is provided with sealing rings (26) on its outside and/or inside.

5. Stop valve according to claim 1, characterised in that the shaft-shaped part (9A) of the spindle (9) is mounted in a plastic sleeve (34) which is provided with sealing rings (35) on its inner and outer circumferential surface.

6. Stop valve according to claim 1, characterised in that the sealing seat (17) is cylindrical and exhibits a ring-shaped recess (33), and in that the neck-shaped projection (16) carries an elastomer ring (34) the surface of which widens radially, preferably conically, from the ends towards the middle.

7. Stop valve according to claim 1, characterised in that the sealing seat (17) tapers in its diameter from both ends preferably conically to a narrow point (35), the narrow point being preferably disposed in the half facing the opening (36), and in that the neck-shaped projection (16) carries an elastomer ring (42) which widens in its outside diameter from both ends to a maximum diameter, preferably forming tapering surfaces (37, 38), the maximum diameter being reached at a point in the upper half.

## Revendications

1. Vanne d'arrêt composée d'un corps (1) pourvu de tubulures de raccordement et d'un couvercle (7), corps dans lequel est disposé un opercule (12) pouvant être déplacé par une broche filetée (9), avec un col (16) de forme cylindrique, caractérisée en ce que les raccordements tubulaires sont disposés des deux côtés du corps (1), en ce que des guidages sont montée de part et d'autre du corps (1), pour l'opercule (12), en ce que sur le corps (1) est fixé un capot (5) sur lequel est monté le couvercle (7), en ce que, dans le couvercle (7), est montée la broche filetée (9) dont une extrémité est réalisée sous forme d'arbre lisse, en étant guidée par une ouverture centrale ménagée dans le couvercle (7) et étant pourvue d'un volant (14) et dont la partie pourvue du filetage s'engage dans un taraudage ménagé dans l'espace creux de l'obturateur (12), en ce que, dans le capot (5), est réalisé un évidement (17) à forme cylindrique creuse ou bien allant en s'agrandissant de façon conique vers l'intérieur, évidement dans lequel le col de l'obturateur (12) peut être enfoncé, et en ce que le siège d'étanchéité du col (16) est constitué, dans l'évidement cylindrique (17) ménagé dans le capot (5), au moyen d'une bague en élastomère (10, 28) qui entoure le col (16) de l'obturateur (12) et appuie sur une surface annulaire du capot (5), la bague en élastomère (10, 28) étant réalisée de manière à ce qu'elle constitue simultanément un moyen de maintien lors du remplacement de la broche (9) et du montage de broche, lorsque la tuyauterie est en exploitation.

2. Vanne d'arrêt selon la revendication 1, caractérisée en ce que la bague en élastomère (10, 28) présente au moins un joint d'étanchéité à lèvre (21).

3. Vanne d'arrêt selon la revendication 1, caractérisée en ce qu'une dérivation (19, 29, 30) entourant le joint d'étanchéité, pouvant être obturée par une soupape (20, 31, 32), est constituée dans le capot (5).

4. Vanne d'arrêt selon la revendication 1, caractérisée en ce que le siège d'étanchéité (17) est constitué par une bague (24) enchâssée, de préférence en matière plastique ou en métal, pourvue sur sa surface extérieure et/ou intérieure de bagues d'étanchéité (26).

5. Vanne d'arrêt selon la revendication 1, caractérisée en ce que la partie ondulée (9A) de la broche (9) est montée dans une douille en matière plastique (34) pourvue sur sa surface périphérique intérieure et extérieure de bagues d'étanchéité (35).

6. Vanne d'arrêt selon la revendication 1, caractérisée en ce que le siège d'étanchéité (17) est cylindrique, présente un évidement (33) annulaire, et en ce que l'appendice (16) en forme de col porte une bague en élastomère (34), dont la surface va en s'agrandissant depuis les extrémités vers le centre pour donner une forme radiale, de préférence conique.

7. Vanne d'arrêt selon la revendication 1, caractérisée en ce que le siège d'étanchéité (17) va en s'effilant en diamètre depuis les deux extrémités frontales, de préférence sous la forme d'un cône, vers un point étroit (35), le point étroit étant disposé de préférence dans la moitié tournée vers l'ouverture (36), et en ce que l'appendice (16) en forme de col porte une bague en élastomère (42) qui va en s'agrandissant en diamètre extérieur depuis les deux faces frontales vers un diamètre maximal, de préférence en constituant des faces (37, 38) coniques, le diamètre maximal étant atteint en un endroit situé dans la moitié supérieure.
